# EUROPÄISCHE PATENTANMELDUNG

(11) **EP 2 557 671 A1**
(43) Veröffentlichungstag der Anmeldung: **13.02.2013**
(21) Anmeldenummer: 11177176.2
(22) Anmeldetag: 10.08.2011
(51) Int. Cl.: H02M 1/36

(54) **Verfahren und Anordnung zur Beeinflussung einer DC-Ausgangsspannung eines Spannungsreglers zum Kompensieren von Spannungseinbrüchen beim Zuschalten von Lasten**

(71) Anmelder: SIEMENS AKTIENGESELLSCHAFT, 80333 München (DE)
(72) Erfinder: Gottron, Jens, 76185 Karlsruhe (DE); Klamm, Arnold, 76870 Kandel (DE)

(57) **Zusammenfassung**

Die Erfindung betrifft ein Verfahren und eine Anordnung zur Beeinflussung einer DC-Ausgangsspannung (2) eines Spannungsreglers (1), mittels dem aus einer Eingangsspannung die DC-Ausgangsspannung (2) zur Versorgung einer Last (3) erzeugt wird. Es werden Maßnahmen vorgeschlagen, durch welche für den Fall des Auftretens eines Lastsprungs eine verbesserte Störsicherheit für dem Schaltregler (1) nachgeschaltete Schaltungsteile ermöglicht wird.

## Beschreibung

Die Erfindung betrifft ein Verfahren zur Beeinflussung einer DC-Ausgangsspannung eines Spannungsreglers, mittels dem aus einer Eingangsspannung die DC-Ausgangsspannung zur Versorgung einer Last erzeugt wird. Darüber hinaus betrifft die Erfindung eine Anordnung mit einem Schaltregler zur Durchführung des Verfahrens.

Aus dem Siemens-Katalog ST 70, Ausgabe 2011 ist ein Automatisierungsgerät bekannt, das mehrere Baugruppen aufweist, welche in Form von Zentral- bzw. CPU-Baugruppen, Kommunikations-oder sonstigen Peripherie- oder Funktionsbaugruppen ausgebildet sind. Eine Stromversorgung versorgt die Baugruppen mit einer geeigneten DC-Spannung, wobei ein Freigabe-Signal, welches eine CPU-Baugruppe den Baugruppen übermittelt, steuerbare Schalter derart schaltet, dass die jeweilige Baugruppe mit der Stromversorgung verbunden bzw. dieser Stromversorgung zugeschaltet wird.

Eine derartige Stromversorgung weist gewöhnlich einen Spannungsregler auf, welcher unabhängig von diversen Störgrößen die Ausgangsspannung weitgehend konstant hält. Aufgrund von Reaktionszeiten des Spannungsreglers kann es beim Zuschalten der Baugruppe oder einer sonstigen Last vorkommen, dass die Ausgangsspannung des Spannungsreglers einbricht. Dies ist insbesondere dann der Fall, wenn vor einem derartigen Lastsprung die Ausgangs- bzw. Anschlussklemmen mit der Leerlaufspannung des Spannungsreglers beaufschlagt sind. Derartige Einbrüche können sich störend auf die Schaltungsteile der Baugruppe auswirken. Beispielsweise für den Fall, dass ein in der Baugruppe angeordneter Regler (Sekundär-Regler) mit der DC-Ausgangsspannung des Spannungsreglers der Stromversorgung zu beaufschlagen ist, kann ein Zuschalten der Baugruppe und somit des Sekundär-Reglers zu einem störenden periodischen Ein- und Ausschalten dieses Sekundär-Reglers führen.

Der Erfindung liegt daher die Aufgabe zugrunde, ein Verfahren der eingangs genannten Art anzugeben, welches für den Fall des Auftretens eines Lastsprungs eine verbesserte Störsicherheit für dem Schaltregler nachgeschaltete Schaltungsteile ermöglicht. Darüber hinaus ist eine Anordnung zu schaffen, welche zur Durchführung des Verfahrens geeignet ist.

Diese Aufgabe wird im Hinblick auf das Verfahren durch die im kennzeichnenden Teil des Anspruchs 1 angegebenen, bezüglich der Anordnung durch die im kennzeichnenden Teil des Anspruchs 4 angegebenen Maßnahmen gelöst.

Die Erfindung geht von der Idee aus, die Kenntnis eines anstehenden Lastsprungs (Stromsprung), der durch das Freigabe-Signal zum Zuschalten der Last an den Spannungsregler angezeigt wird, zur Optimierung des Spannungsreglerverhaltens zu nutzen. Dadurch wird ein "antizipatorisches" Reglerverhalten bewirkt, ein anstehender Lastsprung wird "vorweggenommen" und durch einen im Vergleich zu diesem anstehenden Lastsprung geringeren Lastsprung der Spannungsregler angeregt.

Vorteilhaft ist, dass Toleranzen der Ausgangsspannung sowie die erforderlichen Ausgangskapazitäten des Spannungsreglers reduziert werden können. Ferner wird ein beschleunigter Hochlauf und Systemstart insbesondere in einem System mit mehreren so genannten "point-of-load-Wandlern" ermöglicht.

In einer Ausgestaltung der Erfindung ist vorgesehen, dass das Freigabe-Signal dem Rückkopplungszweig des Spannungsreglers zugeführt wird. Dadurch wird ermöglicht, entweder vor dem Zuschalten der Last die DC-Ausgangsspannung um einen definierten Wert anzuheben und mit dem Zuschalten der Last diese Ausgangsspannung auf einen vorgesehenen Sollwert zu vermindern oder den Rückkopplungszweig impulsförmig kurz vor der steigenden Flanke des Lastsprungs anzusteuern.

Gemäß einer weiteren Ausgestaltung der Erfindung wird mittels des Freigabe-Signals der Spannungsregler über den Lastkreis angeregt. Dadurch reagiert der Spannungsregler schneller auf den bevorstehenden Lastsprung, weil der Regler bereits vor diesem Lastsprung und nicht erst aus dem Zustand des Leerlaufs reagiert.

Anhand der Zeichnung, in der Ausführungsbeispiele der Erfindung veranschaulicht sind, werden im Folgenden die Erfindung, deren Ausgestaltungen sowie Vorteile näher erläutert.

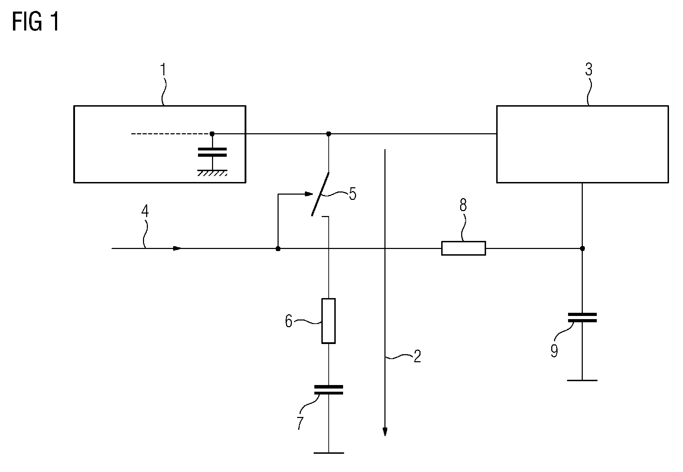

Die Figuren 1 bis 3 zeigen in vereinfachter Darstellung Anordnungen mit einem Spannungsregler und einem sekundären Regler.
Die in den Figuren dargestellten gleichen Teile sind mit gleichen Bezugszeichen versehen.

In Figur 1 ist mit 1 ein Schaltregler einer Stromversorgung bezeichnet, dessen DC-Ausgangsspannung 2 zur Versorgung einer Last vorgesehen ist. Im vorliegenden Ausführungsbeispiel ist die Last in Form einer Peripherie-Baugruppe eines Automatisierungsgerätes verkörpert, deren Regler 3 - im Folgenden als Sekundär-Regler bezeichnet - an den Schaltregler 1 über einen hier nicht dargestellten steuerbaren Schalter angeschlossen ist. Zum Anschließen des Sekundär-Reglers 3 an den Schaltregler 1 ist ein high-aktives Freigabe-Signal 4 zum Schließen dieses steuerbaren Schalters vorgesehen, wobei das Freigabe-Signal 4 eine ebenfalls hier nicht dargestellte CPU-Baugruppe des Automatisierungsgerätes der Peripherie-Baugruppe übermittelt.

Um einen zu hohen Einbruch der DC-Ausgangsspannung 2 durch einen Lastsprung zu vermeiden, wird verhindert, dass das übermittelte Freigabe-Signal 4 unmittelbar den Sekundär-Regler 3 dem Schaltregler 1 zuschaltet. Statt dessen regt das Freigabe-Signal 4 zunächst den Schaltregler 1 über einen steuerbaren Schalter 5 und ein dazu in Serie geschaltetes RC-Glied 6, 7 an, wobei schließlich das Freigabe-Signal 4 aufgrund eines weiteren RC-Glieds 8, 9 verzögert den steuerbaren Schalter zum Zuschalten des Sekundär-Reglers 3 an den Schaltregler 1 schließt. Die Anregung des Schaltreglers 1 über den steuerbaren Schalter 5 und das RC-Glied 6, 7 bewirkt einen durch die Dimensionierung des RC-Glieds 6, 7 vorgegebenen Lastsprung bzw. impulsförmigen Stromsprung, wobei die DC-Ausgangsspannung 2 des Schaltreglers 1 um einen entsprechend dieser Dimensionierung vorgegebenen Wert absinkt. Die Dimensionierung ist so gewählt, dass der Lastsprung den Sekundär-Regler 3 nicht störend beeinflusst. Mit anderen Worten: Der anstehende Lastsprung aufgrund des Zuschaltens des Sekundär-Reglers 3 wird durch einen im Vergleich zu diesem anstehenden Lastsprung geringeren Lastsprung bzw. impulsförmigen Stromsprung "vorweggenommen", wodurch der Spannungsregler 1 angeregt wird und der Schaltregler den anstehenden Lastsprung nicht "aus dem Leerlauf heraus" einregeln muss.

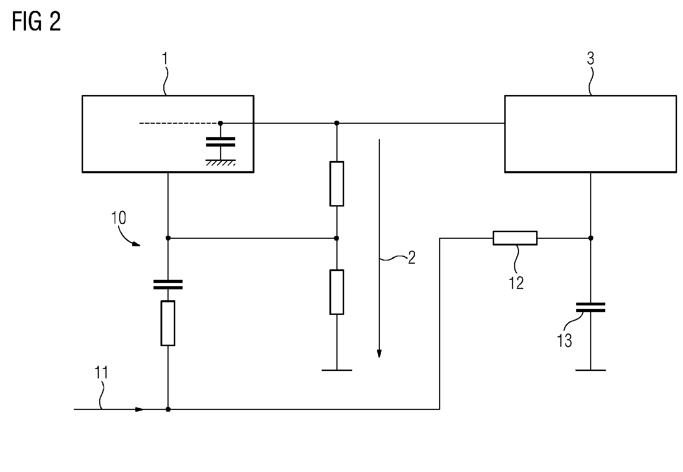

Figur 2 zeigt eine Ausführungsform mit einer mittels einer Signalrückkopplung (Feedback) 10 und eines low-aktiven Freigabesignals 11 bewirkten "Vorwegnahme" eines Lastsprungs. Kurz vor dem Zuschalten des Reglers 3, d. h. kurz vor der steigenden Flanke des Lastsprungs, wird mittels des low-aktiven Freigabesignals 11 der Schaltregler 1 impulsförmig angeregt, was kurzzeitig eine Erhöhung der Ausgangsspannung 2 bewirkt. Die Signalrückkopplung 10 und die Verzögerung mittels eines RC-Glieds 12, 13 ist so dimensioniert, dass die kurzzeitige Erhöhung der Ausgangsspannung 2 den anschließenden Einbruch der Ausgangsspannung derart kompensiert, dass der Einbruch sich nicht störend auf den Regler 3 auswirkt. Dies bedeutet, dass die Ausgangsspannung 2 nicht einen Schwellwert unterschreitet, bei dem sich beispielsweise der Sekundär-Regler 3 periodisch ein- und ausschaltet. Nach dem Einbruch der Ausgangsspannung 2 regelt der Schaltregler 1 die Ausgangsspannung 2 bis zu einem vorgegebenen Sollwert ein.

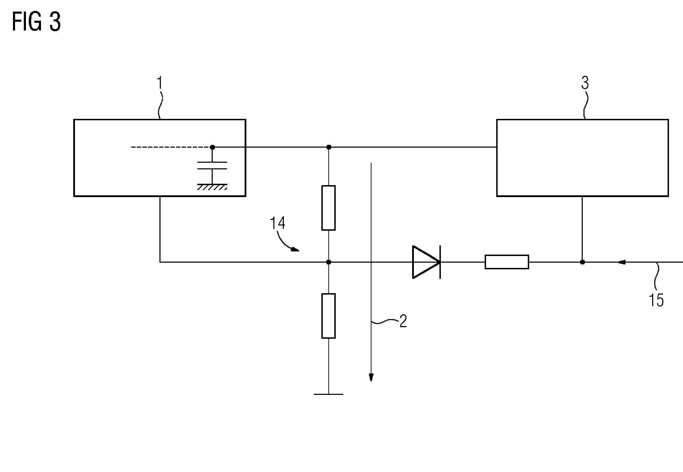

In Figur 3 ist eine Ausführungsform dargestellt, im Rahmen deren eine über einem vorgegebenen Sollwert liegende Ausgangsspannung 2 bei unbelastetem Schaltregler 1 (Leerlauf) eingestellt ist. Mit dem Zuschalten des Sekundär-Reglers 3 durch ein high-aktives Freigabe-Signal 15 wird bewirkt, dass die Ausgangsspannung 2 einbricht. Die Beschaltung einer Signalrückkopplung 14 ist so dimensioniert, dass auch hier der Einbruch sich nicht störend auf den Regler 3 auswirkt, wobei nach dem Einbruch der Schaltregler 1 die Ausgangsspannung 2 auf den Sollwert einregelt.

Die Erfindung lässt sich hiermit wie folgt kurz zusammenfassen:

Es wird ein Verfahren und eine Anordnung zur Beeinflussung einer DC-Ausgangsspannung 2 eines Spannungsreglers 1 angegeben, mittels dem aus einer Eingangsspannung die DC-Ausgangsspannung 2 zur Versorgung einer Last 3 erzeugt wird, wobei mittels eines Freigabe-Signals 4, 11, 15 die Zuschaltung der Last 3 an den Spannungsregler 1 eingeleitet und vor dem Zuschalten der Last 3 der Spannungsregler 1 mittels des Freigabe-Signals 4, 11, 15 angeregt wird.

Mit derartigen Maßnahmen wird im Falle eines Lastsprungs eine verbesserte Störsicherheit für Schaltungsteile der Last ermöglicht.

## Patentansprüche

1. Verfahren zur Beeinflussung einer DC-Ausgangsspannung (2) eines Spannungsreglers (1), mittels dem aus einer Eingangsspannung die DC-Ausgangsspannung (2) zur Versorgung einer Last (3) erzeugt wird, **dadurch gekennzeichnet, dass** mittels eines Freigabe-Signals (4, 11, 15) die Zuschaltung der Last (3) an den Spannungsregler (1) eingeleitet und vor dem Zuschalten der Last (3) der Spannungsregler (1) mittels des Freigabe-Signals (4, 11, 15) angeregt wird.

2. Verfahren nach Anspruch 1, **dadurch gekennzeichnet, dass** mittels des Freigabe-Signals (11, 15) der Spannungsregler (1) über dessen Rückkopplungszweig (10, 14) angeregt wird.

3. Verfahren nach Anspruch 1, **dadurch gekennzeichnet, dass** mittels des Freigabe-Signals (4) der Spannungsregler (1) über den Lastkreis angeregt wird.

4. Anordnung mit einer Last (3) und einem Spannungsregler (1), der aus einer Eingangsspannung eine DC-Ausgangsspannung (2) zur Versorgung der Last (3) erzeugt, **dadurch gekennzeichnet, dass** zur Beeinflussung der DC-Ausgangsspannung (2) des Spannungsreglers (1) Mittel dazu ausgebildet sind, mittels eines Freigabe-Signals (4, 11, 15), welches die Zuschaltung der Last (3) an den Spannungsregler (1) einleitet, vor dem Zuschalten der Last (3) den Spannungsregler (1) anzuregen.

5. Anordnung nach Anspruch 4, **dadurch gekennzeichnet, dass** ein Rückkopplungszweig des Spannungsreglers (1) zur Anregung des Spannungsreglers mittels des Freigabe-Signals (11, 15) vorgesehen ist.

6. Anordnung nach Anspruch 4, **dadurch gekennzeichnet, dass** das Freigabe-Signal (4) vorgesehen ist, über den Lastkreis den Spannungsregler (1) anzuregen.
